(19) Europäisches Patentamt / European Patent Office / Office européen des brevets

(11) **EP 4 657 608 A1**

(12) **EUROPEAN PATENT APPLICATION**

(43) Date of publication:
03.12.2025 Bulletin 2025/49

(21) Application number: 24218152.7

(22) Date of filing: 06.12.2024

(51) International Patent Classification (IPC):
*H01M 10/617* (2014.01)      *H01M 10/613* (2014.01)
*H01M 10/653* (2014.01)      *H01M 10/6557* (2014.01)
*H01M 10/658* (2014.01)      *H01M 50/213* (2021.01)
*H01M 10/625* (2014.01)      *H01M 10/643* (2014.01)

(52) Cooperative Patent Classification (CPC):
H01M 10/613; H01M 10/617; H01M 10/625;
H01M 10/643; H01M 10/653; H01M 10/6557;
H01M 10/658; H01M 50/213; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.05.2024 CN 202421180521 U

(71) Applicant: CALB Group Co., Ltd.
Changzhou City, Jiangsu Province (CN)

(72) Inventors:
• WU, Pei
Changzhou City,
Jiangsu Province (CN)
• CHENG, Keqiang
Changzhou City,
Jiangsu Province (CN)
• LI, Huanfei
Changzhou City,
Jiangsu Province (CN)
• WANG, Jing
Changzhou City,
Jiangsu Province (CN)
• XIE, Benjun
Chengdu City,
Sichuan Province (CN)

(74) Representative: Becker, Eberhard
Becker Kurig & Partner
Patentanwälte mbB
Bavariastraße 7
80336 München (DE)

(54) **HEAT EXCHANGE DEVICE AND BATTERY DEVICE**

(57) A heat exchange device and a battery device are provided. The heat exchange component (200) is arranged adjacent to the battery bank (100) and has a first surface (210) facing the batteries (110), the heat insulation member (300) is at least partially located between the batteries (110) and the heat exchange component (200); wherein the battery bank (100) includes at least one target battery (120), the target battery (120) is closer to the medium inlet (210) than other batteries (110), a plane on which the first surface (210) is located is taken as a reference plane, and on the reference plane, an orthographic projection of the heat insulation member (300) is located within a range of an orthographic projection of the target battery (120) and occupies at least a partial area of the orthographic projection of the target battery (120).

FIG. 2

EP 4 657 608 A1

## Description

## Technical Field

The present disclosure relates to the technical field of batteries, and more particularly relates to a heat exchange device and a battery device.

## Background Art

In the existing design solution of a battery device, the battery device exchanges heat with each battery of a battery bank by utilizing a heat exchange component. With regard to the heat exchange component, a medium inlet thereof is communicated with an internal chamber, and a heat exchange medium enters the chamber via the medium inlet. Since the heat exchange medium which has just entered the chamber has not sufficiently participated in the heat exchange of the battery, there is a greater temperature difference between this heat exchange medium and the heat exchange medium in other areas of the chamber, resulting in that the heat exchange component has a stronger heat exchange effect on the battery close to the medium inlet than other batteries in the battery bank, thereby resulting in a greater temperature difference between various battery in the battery bank, and affecting the temperature consistency of the battery device.

## Summary of the Invention

A main object of the present disclosure is to overcome at least one of the above defects in the prior art and provide a heat exchange device capable of improving the temperature consistency of batteries.

In order to achieve the above object, the present disclosure adopts the following technical solution:

according to one aspect of the present disclosure, a heat exchange device is provided, wherein the heat exchange device is adapted to exchange heat with a battery bank, the battery bank includes at least two batteries arranged along a first direction, and the heat exchange device includes a heat exchange component and a heat insulation member; the heat exchange component is adapted to contact and exchange heat with the at least two batteries of the battery bank, the heat exchange component has a first surface facing the batteries, the heat exchange component has a chamber for accommodating a heat exchange medium therein, and the heat exchange component is provided with a medium inlet communicated with the chamber; the heat insulation member is at least partially located between the batteries and the heat exchange component; wherein the battery bank includes at least one target battery, the target battery is closer to the medium inlet than other batteries, a plane on which the first surface is located is taken as a reference plane, and on the reference plane, an orthographic projection of the heat insulation member is located within a range of an orthographic projection of the target battery and occupies at least a partial area of the orthographic projection of the target battery.

It can be seen from the above technical solution that the advantages and positive effects of the heat exchange device provided in the present disclosure are as follows:

the heat exchange device provided in the present disclosure is adapted to exchange heat with the battery bank, and the heat exchange device includes the heat exchange component and the heat insulation member; the heat exchange component has the first surface facing the batteries, the heat exchange component has the chamber therein and is provided with the medium inlet; the heat insulation member is at least partially located between the batteries and the heat exchange component; the battery bank includes at least one target battery, the target battery is closer to the medium inlet than other batteries of the battery bank, the plane on which the first surface is located is taken as the reference plane, and on the reference plane, the orthographic projection of the heat insulation member is located within the range of the orthographic projection of the target battery and occupies at least a partial area of the orthographic projection of the target battery. Through the above structural design, according to the present disclosure, the heat exchange between the heat exchange component in the area and the batteries can be blocked by utilizing the heat insulation member, so as to avoid a greater temperature difference between the battery close to the medium inlet and other batteries, thereby being conducive to improving the temperature consistency of the battery device.

Another main object of the present disclosure is to overcome at least one of the above defects in the prior art and provide a battery device with better temperature consistency.

In order to achieve the above object, the present disclosure adopts the following technical solution:

according to another aspect of the present disclosure, a battery device is provided, wherein the battery device includes a battery bank and the heat exchange device provided in the present disclosure, the battery bank includes at least two batteries arranged along a first direction, and the heat exchange device is adapted to exchange heat with the battery bank.

It can be seen from the above technical solution that the advantages and positive effects of the battery device provided in the present disclosure are as follows:

the battery device provided in the present disclosure can avoid a greater temperature difference between the battery close to the medium inlet and other batteries by adopting the heat exchange device provided in the present disclosure, and has better temperature consistency.

## Brief Description of the Drawings

Various objects, features and advantages of the present disclosure will become more apparent from considering the following detailed description of preferred embodiments of the present disclosure in conjunction with accompanying drawings. The accompanying drawings are merely exemplary illustrations of the present disclosure and are not necessarily drawn to scale. In the accompanying drawings, like reference numerals always refer to the same or similar components. In the drawings:

FIG. 1 is a schematic three-dimensional structure diagram of a partial structure of a battery device shown according to an exemplary embodiment.

FIG. 2 is a schematic three-dimensional exploded diagram of FIG. 1.

FIG. 3 is a schematic plan diagram of a heat exchange component shown in FIG. 2.

FIG. 4 is a cross-sectional diagram taken along a straight line A-A in FIG. 3.

FIG. 5 is a partial cross-sectional diagram of the heat exchange component of the battery device shown according to another exemplary embodiment.

FIG. 6 is a schematic three-dimensional structure diagram of the heat exchange component of the battery device shown according to yet another exemplary embodiment.

FIG. 7 is a partial cross-sectional diagram of the heat exchange component shown in FIG. 6.

The reference numerals are described below:

100. battery bank;
110. battery;
120. target battery;
200. heat exchange component;
201. first surface;
210. medium inlet;
300. heat insulation member;
310. through hole;
400. heat conductive adhesive layer;
d1. thickness;
d2. thickness;
d3. thickness;
X. first direction; and
Y second direction.

**Detailed Description of the Invention**

Typical examples which embody the features and advantages of the present disclosure will be described in detail in the following description. It should be understood that the present disclosure can have various changes in different examples without departing from the scope of the present disclosure, and the description and accompanying drawings therein are used for illustrative purposes in nature and are not intended to limit the present disclosure.

In the following description of different exemplary embodiments of the present disclosure, reference is made to the accompanying drawings which form a part of the present disclosure, and wherein different exemplary structures, systems and steps which may implement a plurality of aspects of the present disclosure are shown by way of illustration. It should be understood that other specific solutions of components, structures, exemplary devices, systems and steps may be used, and structural and functional modifications may be made without departing from the scope of the present disclosure. Moreover, although the terms "above", "between", "within", and the like may be used for describing different exemplary features and elements of the present disclosure in this specification, these terms are used herein for convenience only, for example, according to an exemplary direction described in the accompanying drawings. Any content in this specification should not be construed as requiring specific three-dimensional directions of the structure to fall within the scope of the present disclosure.

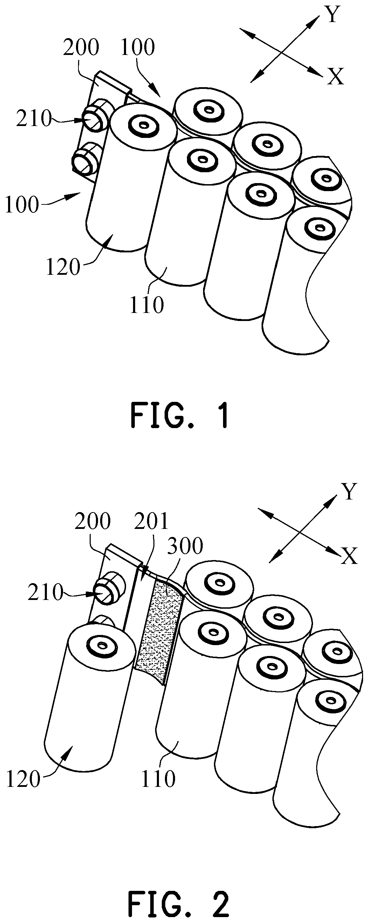

With reference to FIG. 1, FIG. 1 representatively shows a schematic three-dimensional structure diagram of a partial structure of a battery device provided in the present disclosure, wherein a combined structure of one heat exchange component 200 and two battery banks 100 of a heat exchange device provided in the present disclosure is specifically shown. In this exemplary embodiment, the heat exchange device provided in the present disclosure is described by taking the heat exchange device applied to a vehicle-mounted battery as an example. It will be readily understood by those skilled in the art that many variations, additions, substitutions, deletions or other changes to the specific embodiments described below may be made in order to apply the relevant design of the present disclosure to other types of battery devices, and these changes are still within the scope of the principle of the heat exchange device provided in the present disclosure.

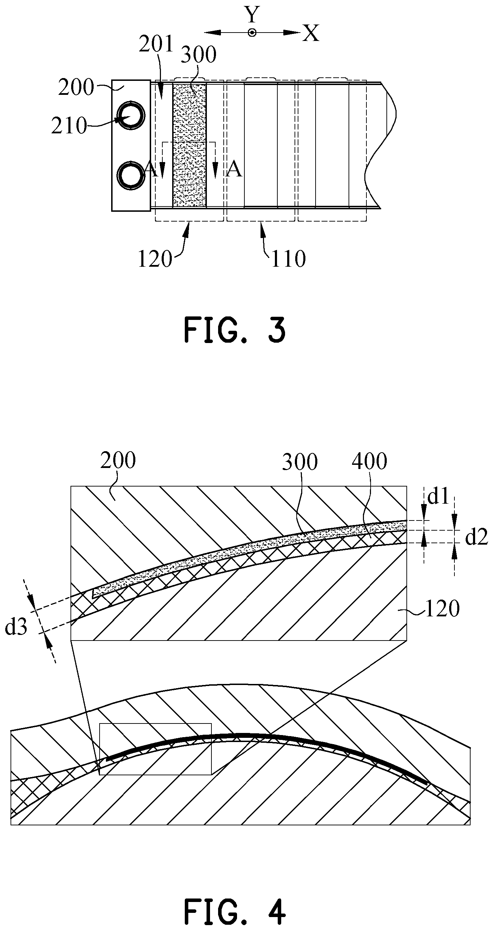

As shown in FIG. 1, in one embodiment of the present disclosure, the heat exchange device provided in the present disclosure is adapted to exchange heat with the battery bank 100, and the heat exchange device includes a heat exchange component 200 and a heat insulation member 300. With co-reference to FIG. 2 to FIG. 4, FIG. 2 representatively shows a schematic three-dimensional exploded diagram of FIG. 1, wherein specifically the heat exchange component 200 is separated from the battery bank 100; FIG. 3 representatively shows a schematic plan diagram of the heat exchange component 200; and FIG. 4 representatively shows a cross-sectional diagram taken along a straight line A-A in FIG. 3. The structures, connection modes and functional relationships of various main constituent parts of the heat exchange device provided in the present disclosure will be described in detail below in conjunction with the above accompanying drawings.

As shown in FIG. 1 to FIG. 3, the battery bank 100 includes at least two batteries 110 arranged along a first direction X. The heat exchange component 200 is adapted to contact and exchange heat with the at least two batteries 110 of the battery bank 100, the heat exchange component 200 has a first surface 201 facing the batteries 110, that is, the heat exchange component 200 contacts and exchanges heat with the batteries 110 via the first surface 201, and the so-called contact and heat exchange may be understood to be direct contact or indirect contact. The heat exchange component 200 has a chamber for accommodating a heat exchange medium therein, and the heat exchange component 200 is provided with a medium inlet 210 communicated with the chamber. The heat insulation member 300 is at least partially located between the batteries 110 and the heat exchange component 200, for example, the heat insulation member 300 may be arranged on the first surface 201 of the heat exchange component 200, and may also be arranged on sides of the batteries 110 facing the heat exchange component 200. On this basis, in order to facilitate understanding and explanation, a target battery 120 is defined in this specification, the target battery 120 refers to a battery 110 closer to the medium inlet 210 than other batteries 110 in the battery bank 100, and with regard to one battery bank 100, there may be one target battery 120, that is, one battery closest to the medium inlet 210, and there may be two or more target batteries 120, that is, a plurality of batteries 110 which are closer to the medium inlet 210 than other batteries 110, wherein a plane on which the first surface 201 of the heat exchange component 200 is located is taken as a reference plane, and on the reference plane, an orthographic projection of the heat insulation member 300 is located within a range of an orthographic projection of the target battery 120 and occupies at least a partial area of the orthographic projection of the target battery 120, that is, the orthographic projection of the heat insulation member 300 may occupy the whole area of the orthographic projection of the target battery 120, and may also occupy one part or at least two parts of the area contained in the orthographic projection of the target battery 120. Through the above structural design, according to the present disclosure, the heat exchange between the heat exchange component 200 in the area and the batteries 110 can be blocked by utilizing the heat insulation member 300, so as to avoid a greater temperature difference between the battery 110 close to the medium inlet 210 and other batteries 110, thereby improving the temperature consistency of the battery device.

As shown in FIG. 4, in one embodiment of the present disclosure, a thickness d1 of the heat insulation member 300 may be 0.1 mm to 2 mm, for example, 0.1 mm, 0.5 mm, 1 mm, 2 mm, and the like. It should be noted that although the structural design of "a heat conductive adhesive layer 400 being arranged between the batteries 110 and the heat exchange component 200, and the heat conductive adhesive layer 400 being cladded on the heat insulation member 300" is adopted in the embodiment shown in FIG. 4, the identification of the thickness d1 of the heat insulation member 300 therein is merely exemplary, in other words, whether the heat conductive adhesive layer 400 is arranged between the batteries 110 and the heat exchange component 200, or whether the heat conductive adhesive layer 400 is cladded on the heat insulation member 300, the above structural design with regard to the thickness d1 of the heat insulation member 300 may be adopted in some embodiments of the present disclosure. Through the above structural design, the present disclosure can avoid excessive space occupation caused by the excessive thickness d1 of the heat insulation member 300, thereby being conducive to improving a space utilization rate of the battery device, and meanwhile, the present disclosure can avoid an insufficient heat exchange blocking effect caused by the deficient thickness d2 of the heat insulation member 300. In some embodiments, the thickness d1 of the heat insulation member 300 may also be less than 0.1 mm, or may be greater than 2 mm, for example, 0.09 mm, 2.05 mm, and the like, without being limited to this embodiment.

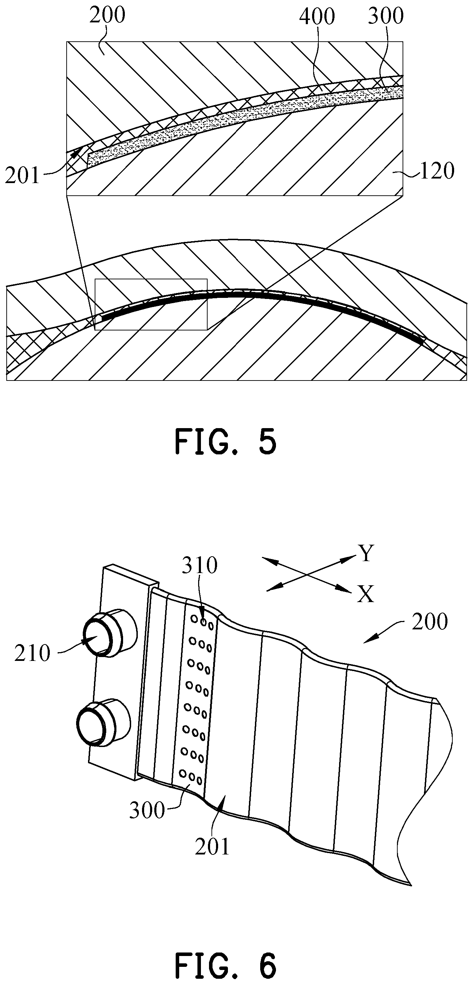

As shown in FIG. 2, in one embodiment of the present disclosure, the heat insulation member 300 may be of a sheet-like structure, and the heat insulation member 300 may be attached to the heat exchange component 200. Through the above structural design, the present disclosure can further reduce space occupation by utilizing the sheet-like design of the heat insulation member 300, and is more convenient for industrialized implementation by utilizing the way of attachment. In some embodiments, for example, as shown in FIG. 5, the heat insulation member 300 adopting the sheet-like structure may also be attached to the battery 110, without being limited to this embodiment.

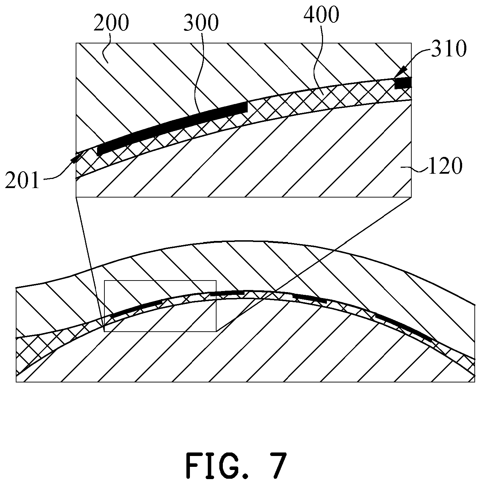

With reference to FIG. 6 and FIG. 7, FIG. 6 representatively shows a schematic three-dimensional structure diagram of a partial structure of the battery device capable of embodying the principle of the present disclosure in another exemplary embodiment, wherein a combined structure of the heat exchange component 200 and the heat insulation member 300 is specifically shown; and FIG. 7 representatively shows a partial cross-sectional diagram of FIG. 6.

As shown in FIG. 6 and FIG. 7, in one embodiment of the present disclosure, the heat insulation member 300 may be provided with through holes 310. Through the above structural design, the present disclosure can further balance the heat exchange between the target battery 120 and the heat exchange component 200 by utilizing the through holes 310, so as to prevent the heat exchange between the target battery 120 and the heat exchange component 200 from being completely blocked in the area of the heat insulation member 300, and avoid the problem of uneven heat generated by the target battery 120. It should be noted that in the embodiments shown in FIG. 6 and FIG. 7, description is made by taking the exemplary heat insulation member 300 being arranged on the heat exchange component 200 as an example, and in some embodiments of the present disclosure, when the heat insulation member 300 is arranged on one side of the battery 110 facing the heat exchange component 200, the heat insulation member 300 may also be provided with the through holes 310, without being limited to this embodiment.

As shown in FIG. 7, based on the structural design that the heat insulation member 300 is provided with the through holes 310, in one embodiment of the present disclosure, the heat conductive adhesive layers 400 may be arranged in the through holes 310 of the heat insulation member 300. Through the above structural design, the present disclosure can improve the heat exchange between the target battery 120 and the heat exchange component 200 in the areas of the through holes 310 by utilizing the heat conductive adhesive layers 400, and meanwhile can achieve the mutual fixation of the target battery 120 and the heat exchange component 200 in these areas via the heat conductive adhesive layers 400. In some embodiments, when the heat insulation member 300 is provided with the through holes 310, heat conductive structures of other materials may also be arranged in the through holes 310, for example, heat conductive structures without a conglutination effect, or there may be no filling substance arranged in the through holes 310. In addition, in conjunction with the embodiment shown in FIG. 4, the heat conductive adhesive layers 400 arranged in the through holes 310 may be a part of the heat conductive adhesive layer 400 cladded on the heat insulation member 300, for example, the heat conductive adhesive layer 400 coated on the surface of the heat insulation member 300 is formed by flowing into the through holes 310 before being consolidated. Of course, whether the heat insulation member 300 is cladded by the heat conductive adhesive layer 400 may not be directly related to whether the heat conductive adhesive layers 400 are arranged in the through holes 310, and the two design solutions may be flexibly selected according to needs, without being limited to the above embodiment.

Based on the structural design that the heat insulation member 300 is provided with the through holes 310, in one embodiment of the present disclosure, a total area of the heat insulation member 300 is defined as S, and a sum of areas of all the through holes 310 formed in the heat insulation member 300 is defined as Si. On this basis, the above total area and the above sum of areas may satisfy the following condition:

$$4 \leq S/(S-0.92 \cdot S_1) \leq 6.$$

Through the above structural design, since the heat insulation member 300 achieves the heat exchange between the target battery 120 and the heat exchange component 200 at the positions where the through holes 310 are formed, that is, at least partially determines the heat exchange effect of the target battery 120, according to the present disclosure, the areas of the through holes 310 are controlled to be within a suitable range, thereby preventing the heat exchange blocking effect of the heat insulation member 300 from being not obvious due to the excessive areas of the through holes 310, and preventing being unfavorable for cooling the target battery 120 due to the deficient areas of the through holes 310.

It should be noted herein that the heat exchange devices shown in the accompanying drawings and described in this specification are only a few instances of various types of heat exchange devices which can adopt the principle of the present disclosure. It should be clearly understood that the principle of the present disclosure is in no way limited to any detail or any component of the heat exchange devices shown in the accompanying drawings or described in this specification.

In summary, the heat exchange device provided in the present disclosure is adapted to exchange heat with the battery bank 100, and the heat exchange device includes the heat exchange component 200 and the heat insulation member 300; the heat exchange component 200 has the first surface 201 facing the batteries 110, the heat exchange component 200 has the chamber therein and is provided with the medium inlet 210; the heat insulation member 300 is at least partially located between the batteries 110 and the heat exchange component 200; the battery bank 100 includes at least one target battery 120, the target battery 120 is closer to the medium inlet 210 than other batteries 110 of the battery bank 100, the plane on which the first surface 201 is located is taken as the reference plane, and on the reference plane, the orthographic projection of the heat insulation member 300 is located within the range of the orthographic projection of the target battery 120 and occupies at least a partial area of the orthographic projection of the target battery 120. Through the above structural design, according to the present disclosure, the heat exchange between the heat exchange component 200 in the area and the batteries 110 can be blocked by utilizing the heat insulation member 300, so as to avoid a greater temperature difference between the battery 110 close to the medium inlet 210 and other batteries 110, thereby being conducive to improving the temperature consistency of the battery device.

Based on the above detailed description of several exemplary embodiments of the heat exchange device provided in the present disclosure, one exemplary embodiment of the battery device provided in the present disclosure will be described below.

As shown in FIG. 1, in one embodiment of the present disclosure, the battery device provided in the present disclosure includes a battery bank 100 and the heat exchange device provided in the present disclosure and described in detail in the above embodiment, wherein the battery bank 100 includes at least two batteries 110 arranged along a first direction X, and the heat exchange device is adapted to exchange heat with the battery bank 100.

As shown in FIG. 3, in one embodiment of the present disclosure, the plane on which the first surface 201 of the heat exchange component 200 facing the batteries 110 is located is taken as the reference plane, and on the reference plane, the orthographic projection of the heat insulation member 300 may occupy only a partial area of the orthographic projection of the target battery 120. On this basis, the heat conductive adhesive layer 400 may be arranged between each of the batteries 110 and the heat exchange component 200, that is, with regard to the target battery 120, although the heat insulation member 300 is arranged in an area of the first surface 201 of the heat exchange component 200 corresponding to the target battery 120, the area of the first surface 201 corresponding to the target battery 120 is not completely covered by the heat insulation member 300, so that the heat conductive adhesive layer 400 may be arranged between a part of the area which is not occupied by the heat insulation member 300 and the target battery 120. It should be noted that in order to facilitate observation of the heat insulation member 300, the heat conductive adhesive layer 400 is hidden in FIG. 3. Through the above structural design, the present disclosure can achieve the fixation of the batteries 110 and the heat exchange component 200 by utilizing the heat conductive adhesive layer 400, and can achieve the heat exchange between the two, thereby further improving the heat exchange effect. In some embodiments, when the orthographic projection of the heat insulation member 300 occupies the whole area of the orthographic projection of the target battery 120, the target battery 120 and the heat exchange component 200 may also be fixedly connected via other modes, or indirectly connected via connection with other elements, without being limited to this embodiment.

As shown in FIG. 4, based on the structural design that the heat conductive adhesive layer 400 is arranged between the target battery 120 and the heat exchange component 200, in one embodiment of the present disclosure, the heat conductive adhesive layer 400 may be cladded on the heat insulation member 300. In other words, with regard to the target battery 120, the heat conductive adhesive layer 400 may be arranged not only in the area not occupied by the heat insulation member 300, but also in the area occupied by the heat insulation member 300, and the heat conductive adhesive layers 400 in the areas are located between the heat insulation member 300 and the battery 110 (or located between the heat insulation member 300 and the heat exchange component 200), so that the heat conductive adhesive layers 400 in the above two areas may be connected together, so as to achieve the cladding of the heat insulation member 300. On this basis, the sum of a thickness d2 of a part of the heat conductive adhesive layer 400 where the heat insulation member 300 is arranged and a thickness d1 of the heat insulation member 300 may be equal to a thickness d3 of a part of the heat conductive adhesive layer 400 where the heat insulation member 300 is not arranged. Through the above structural design, the present disclosure can ensure that the thickness of the heat conductive adhesive layer 400 is uniform at each position, thereby facilitating the grouping of the batteries 110, and avoiding the excessive thickness of the heat conductive adhesive layer 400 covering the area of the heat insulation member 300 simultaneously.

As shown in FIG. 4, based on the structural design that the heat conductive adhesive layer 400 is cladded on the heat insulation member 300, in one embodiment of the present disclosure, the heat insulation member 300 is arranged on the first surface 201 of the heat exchange component 200, and the heat conductive adhesive layer 400 is cladded on one side of the heat insulation member 300 facing the batteries 110 and the edge, in other words, the heat conductive adhesive layer 400 is cladded on other sides of the heat insulation member 300 except one side facing the heat exchange component 200.

With reference to FIG. 5, FIG. 5 representatively shows a partial cross-sectional diagram of the heat exchange component 200 of the battery device capable of embodying the principle of the present disclosure in another exemplary embodiment, with specific reference to the cutting position of FIG. 4 in FIG. 3.

Different from the embodiment shown in FIG. 4, in which the structural design that the heat insulation member 300 is arranged on the heat exchange component 200 is adopted, as shown in FIG. 5, in another embodiment of the present disclosure, the heat insulation member 300 may be arranged on one side of the battery 110 facing the heat exchange component 200, and at this moment, when the heat conductive adhesive layer 400 is cladded on the heat insulation member 300, the heat conductive adhesive layer 400 is specifically cladded on one side of the heat insulation member 300 facing the heat exchange component 200 and the edge, in other words, the heat conductive adhesive layer 400 is cladded on other sides of the heat insulation member 300 except one side facing the target battery 120.

As shown in FIG. 1 to FIG. 2, in one embodiment of the present disclosure, the battery 110 may be a cylindrical battery 110.

As shown in FIG. 1 and FIG. 2, based on the structural design that the battery 110 is the cylindrical battery 110, an end face (that is, a circular surface) on one side of the cylindrical battery 110 faces the heat exchange component 200, in other words, the end face of the cylindrical battery 110 contacts and exchanges heat with the first surface 201 of the heat exchange component 200.

As shown in FIG. 1, in one embodiment of the present disclosure, the battery device provided in the present disclosure includes a battery 110 box, the battery 110 box includes a bottom plate, wherein the first surface 201 of the heat exchange component 200 may be arranged perpendicular to the bottom plate. In other words, by taking the heat exchange component 200 being a heat exchange plate as an example, the heat exchange plate is arranged on the bottom plate in a "standing" manner. Further, when the battery 110 is the cylindrical battery 110 and the end face of the cylindrical battery 110 contacts and exchanges heat with the first surface 201 of the heat exchange component 200, which is equivalent to an axial direction of the cylindrical battery 110 being parallel to the bottom plate and perpendicular to the first surface 201 of the heat exchange component 200, accordingly, a "lying" arrangement mode is adopted for the cylindrical battery 110.

As shown in FIG. 1, in one embodiment of the present disclosure, the battery device provided in the present disclosure may include at least two battery banks 100, wherein these battery banks 100 are arranged along a second direction Y, and the second direction Y is perpendicular to the above first direction X. For example, two sides of at least one heat exchange component 200 in the second direction Y are each provided with one battery bank 100, that is, the at least one heat exchange component 200 achieves heat exchange for the two battery banks 100 on the two sides simultaneously. For another example, only one side of the at least one heat exchange component 200 in the second direction Y is provided with the battery bank 100. On this basis, the heat insulation member 300 is arranged between the target battery 120 of the battery bank 100 located at the end in the second direction Y and the corresponding heat exchange component 200. In other words, the heat insulation member 300 may be or may not be arranged between the target battery 120 of the battery bank 100 located in the middle (except the end) in the second direction Y and the corresponding heat exchange component 200. Through the above structural design, since in a plurality of battery banks 100, the temperatures of the batteries 110 of the battery banks 100 located at the end are lower than the temperatures of the batteries 110 of the battery banks 100 in the middle, the present disclosure can improve the temperature consistency of the plurality of battery banks 100.

It should be noted herein that the battery devices shown in the accompanying drawings and described in this specification are only a few instances of various types of battery devices which can adopt the principle of the present disclosure. It should be clearly understood that the principle of the present disclosure is in no way limited to any detail or any component of the battery devices shown in the accompanying drawings or described in this specification.

In summary, the battery device provided in the present disclosure can avoid a greater temperature difference between the battery 110 (for example, the target battery 120) close to the medium inlet 210 and other batteries 110 by adopting the heat exchange device provided in the present disclosure, and has better temperature consistency. The exemplary embodiments of the heat exchange device and the battery device which are provided in the present disclosure are described and/or illustrated in detail above. However, the embodiments of the present disclosure are not limited to the specific embodiments described herein, rather, the constituent parts and/or steps of each embodiment may be used independently and separately from other constituent parts and/or steps described herein. Each constituent part and/or each step of one embodiment may also be used in combination with other constituent parts and/or steps of other embodiments. When introducing elements/constituent parts/and the like described and/or illustrated herein, the wording "a", "an", "the", and the like is intended to mean that there are one or more elements/constituent parts/and the like. The terms "including", "comprising" and "having" are used in an open-ended inclusive sense and mean that there may be additional elements/constituent parts/and the like in addition to the listed elements/constituent parts/and the like. Moreover, the terms "first", "second", and the like in the claims and the specification are used merely as labels and are not intended to be numerical limitations on the subject matter thereof.

## Claims

1. A heat exchange device, **characterized in that** the heat exchange device is configured to exchange heat with a battery bank (100), the battery bank (100) comprises at least two batteries (110) arranged along a first direction (X), and the heat exchange device comprises:

   a heat exchange component (200) configured to contact and exchange heat with the at least two batteries (110) of the battery bank (100), the heat exchange component (200) having a first surface (201) facing the batteries (110), the heat exchange component (200) having a chamber for accommodating a heat exchange medium therein, and the heat exchange component (200) being provided with a medium inlet (210) communicated with the chamber; and
   a heat insulation member (300) at least partially located between the batteries (110) and the heat exchange component (200);
   wherein the battery bank (100) comprises at least one target battery (120), the target battery (120) is a battery closest to the medium inlet (210), a plane on which the first surface (201) is located is taken as a reference plane, and on the reference plane, an orthographic projection of the heat insulation member (300) is completely located within a range of an orthographic projection of the target battery (120) and occupies at least a partial area of the orthographic projection of the target battery (120).

2. The heat exchange device according to claim 1, **characterized in that** the heat insulation member (300) has a thickness of 0.1 mm to 2 mm.

3. The heat exchange device according to claim 1, **characterized in that** the heat insulation member (300) is of a sheet-like structure, and the heat insulation member (300) is attached to the heat exchange component (200) or the batteries (110).

4. The heat exchange device according to claim 1, **characterized in that** the heat insulation member (300) is provided with through holes (310).

5. The heat exchange device according to claim 4, **characterized in that** heat conductive adhesive layers (400) are arranged in the through holes (310).

6. The heat exchange device according to claim 4, **characterized in that** a total area of the heat insulation member (300) is defined as S, and a sum of areas of all the through holes (310) formed in the heat insulation member (300) is defined as Si; wherein the total area and the sum of areas satisfy the following condition: $4 \leq S/(S-0.92 \cdot S_1) \leq 6$.

7. A battery device, **characterized by** comprising a battery bank (100) and the heat exchange device according to any one of claims 1 to 6, wherein the battery bank (100) comprises at least two batteries (110) arranged along the first direction (X), and the heat exchange device is configured to exchange heat with the battery bank (100).

8. The battery device according to claim 7, **characterized in that** the plane on which the first surface (210) of the heat exchange component (200) facing the batteries (110) is located is taken as the reference plane, and on the reference plane, an orthographic projection of the heat insulation member (300) occupies the partial area of the orthographic projection of the target battery (120); wherein the heat conductive adhesive layers (400) are arranged between each of the batteries (110) and the heat exchange component (200).

9. The battery device according to claim 8, **characterized in that** the heat conductive adhesive layer (400) is cladded on the heat insulation member (300); wherein a sum of a thickness of a part of the heat conductive adhesive layer (400) where the heat insulation member (300) is arranged and a thickness of the heat insulation member (300) is equal to a thickness of a part of the heat conductive adhesive layer (400) where the heat insulation member (300) is not arranged.

10. The battery device according to claim 9, **characterized in that**,

the heat insulation member (300) is arranged on the first surface (210) of the heat exchange component (200), and the heat conductive adhesive layer (400) is cladded on one side of the heat insulation member (300) facing the batteries (110) and an edge; or
the heat insulation member (300) is arranged on sides of the batteries (110) facing the heat exchange component (200), and the heat conductive adhesive layer (400) is cladded on one side of the heat insulation member (300) facing the heat exchange component (200) and the edge.

11. The battery device according to claim 7, **characterized in that** the batteries (110) are cylindrical batteries.

12. The battery device according to claim 7, **characterized in that** the battery device comprises a battery box, wherein the battery box comprises a bottom plate, and the first surface (210) of the heat exchange component (200) is arranged perpendicular to the bottom plate.

13. The battery device according to claim 7, **characterized in that** the battery device comprises at least two battery banks (100), the at least two battery banks (100) are arranged along a second direction (Y), and the second direction (Y) is perpendicular to the first direction (X); wherein the heat insulation member (300) is arranged between the target battery (120) of the battery bank (100) located at the end in the second direction (Y) and the heat exchange component (200).

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

**Application Number**

EP 24 21 8152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/006135 A1 (FLANNERY BARRY [IE]) 6 January 2022 (2022-01-06) * paragraph [0134]; claim 1; figures 11, 12 * | 1-13 | INV. H01M10/617 H01M10/613 H01M10/653 H01M10/6557 |
| A | CN 217 086 711 U (ZHONGXINHANG TECHNOLOGY CO LTD) 29 July 2022 (2022-07-29) * claim 7; figure 10 * | 1 | H01M10/658 H01M50/213 H01M10/625 H01M10/643 |

-----

-----

**TECHNICAL FIELDS SEARCHED (IPC)**

H01M

The present search report has been drawn up for all claims

| Place of search | Date of completion of the search | Examiner |
|---|---|---|
| The Hague | 12 May 2025 | Nicolas, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8152

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| US 2022006135 A1 | 06-01-2022 | AU 2019376429 A1 | 17-06-2021 |
| | | AU 2024227064 A1 | 31-10-2024 |
| | | BR 112021008638 A2 | 10-08-2021 |
| | | CA 3157308 A1 | 14-05-2020 |
| | | CA 3157310 A1 | 14-05-2020 |
| | | CA 3157317 A1 | 14-05-2020 |
| | | CN 113273017 A | 17-08-2021 |
| | | CN 113273018 A | 17-08-2021 |
| | | CN 113273019 A | 17-08-2021 |
| | | DK 3878044 T3 | 02-10-2023 |
| | | DK 3878045 T3 | 11-12-2023 |
| | | EP 3878043 A1 | 15-09-2021 |
| | | EP 3878044 A1 | 15-09-2021 |
| | | EP 3878045 A1 | 15-09-2021 |
| | | ES 2961036 T3 | 07-03-2024 |
| | | ES 2967717 T3 | 03-05-2024 |
| | | FI 3878045 T3 | 13-12-2023 |
| | | GB 2578738 A | 27-05-2020 |
| | | HU E064721 T2 | 28-04-2024 |
| | | HU E065729 T2 | 28-06-2024 |
| | | JP 7399163 B2 | 15-12-2023 |
| | | JP 2022506553 A | 17-01-2022 |
| | | JP 2022506564 A | 17-01-2022 |
| | | KR 20210092756 A | 26-07-2021 |
| | | KR 20210094559 A | 29-07-2021 |
| | | PL 3878044 T3 | 04-12-2023 |
| | | PL 3878045 T3 | 18-03-2024 |
| | | US 2021320343 A1 | 14-10-2021 |
| | | US 2022006135 A1 | 06-01-2022 |
| | | US 2022263159 A1 | 18-08-2022 |
| | | US 2023155205 A1 | 18-05-2023 |
| | | WO 2020094364 A1 | 14-05-2020 |
| | | WO 2020094365 A1 | 14-05-2020 |
| | | WO 2020094366 A1 | 14-05-2020 |
| | | ZA 202103679 B | 31-08-2022 |
| CN 217086711 U | 29-07-2022 | NONE | |